(19) Europäisches Patentamt
European Patent Office
Office européen des brevets

(11) **EP 4 267 533 B1**

(12) **EUROPEAN PATENT SPECIFICATION**

(45) Date of publication and mention
of the grant of the patent:
**04.02.2026 Bulletin 2026/06**

(21) Application number: **21827677.2**

(22) Date of filing: **13.12.2021**

(51) International Patent Classification (IPC):
**C05B 1/04** *(2006.01)* **C05C 9/00** *(2006.01)*
**C05G 5/12** *(2020.01)*

(52) Cooperative Patent Classification (CPC):
(C-Sets available)
**C05G 5/12; C05C 9/005;** Y02P 60/21 (Cont.)

(86) International application number:
**PCT/IB2021/061652**

(87) International publication number:
**WO 2022/137010 (30.06.2022 Gazette 2022/26)**

(54) **UREA FOR TOP DRESSING ENRICHED WITH CALCIUM, MAGNESIUM, SULFUR, AND POTASSIUM**

MIT CALCIUM, MAGNESIUM, SCHWEFEL UND KALIUM ANGEREICHERTER HARNSTOFF FÜR DIE OBERE BEHANDLUNG

URÉE POUR UN ÉPANDAGE EN SURFACE ENRICHI EN CALCIUM, MAGNÉSIUM, SOUFRE ET POTASSIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2020 US 202063128906 P**

(43) Date of publication of application:
**01.11.2023 Bulletin 2023/44**

(73) Proprietor: **Sabic Agri-Nutrients Company
31961 Jubail (SA)**

(72) Inventors:
• **BAG, Nilkamal
Bangalore 562125 (IN)**

• **KUMAR, Arvind
Bangalore 562125 (IN)**

(74) Representative: **J A Kemp LLP
80 Turnmill Street
London EC1M 5QU (GB)**

(56) References cited:
EP-A1- 3 374 331 WO-A1-2020/064036
WO-A1-2021/059261 WO-A1-2021/152571
WO-A1-2021/240501 GB-A- 1 263 719

• **DATABASE WPI Week 201403, Derwent World Patents Index; AN 2013-R59976, XP002805803**

EP 4 267 533 B1

(52) Cooperative Patent Classification (CPC): (Cont.)

C-Sets
**C05C 9/005, C05D 1/00, C05D 5/00, C05D 9/02**

**Description**

**BACKGROUND OF THE INVENTION**

**A. Field of the Invention**

The invention generally concerns urea containing fertilizers. In particular, the invention concerns fertilizer granules containing urea, langbeinite and optionally calcium.

**B. Description of Related Art**

To increase crop yield and satisfy the growing needs of an increasing population, more fertilizers are being used in agriculture. However, continuous use of fertilizer can lead to nutrient imbalance and loss of soil fertility.

Urea is a commonly used nitrogen fertilizer. However, urea nitrogen is volatile and due to its rapid hydrolysis and nitrification in soil, nitrogen from urea can be quickly lost. To counter this effect, urea, for example when applied as a top dressing fertilizer, is applied in a relatively large excess to provide a continuous supply of nitrogen to the plants.

Further depending on the crop and soil type, additional nutrients may also be required for increasing crop yields. However, using urea in fertilizer blends that contain other soil nutrients is difficult, as urea can undesirably react with other components in the fertilizer, such as organic fertilizers. These reactions can produce water that liquefies solid granules or dry mixture products, cause clumping and loss of product, and increase the rate at which these undesirable reactions take place. *See* Biskupski et al. (EP 2,774,907); *see also* Achard et al. (US 5,409,516). Further, the production of water increases the amount of water that has to be removed during production of urea containing fertilizers, making these blended fertilizers difficult and more expensive to make. *See* Schwob (FR 2,684,372).

WO 2020/064036 A1 discusses fertilizer granules comprising magnesium, calcium, potassium, sulfate and urea. GB 1263719 A a granular fertilizer prepared by tumbling or agitating a mixture containing ammonium phosphate, urea and a potassium salt such as KCl or $K_2SO_4$. DATABASE WPIWeek 201403 Thomson Scientific, London, GB;AN 2013-R59976-& CN 103130580 A discusses a method of producing a urea sulfuric acid multi-nutrient functional compound fertilizer.

**SUMMARY OF THE INVENTION**

A solution to at least some of the problems discussed above has been discovered. In one aspect, the solution includes providing a fertilizer granule that includes additional nutrients, such as sulfur (S), magnesium (Mg), potassium (K) and optionally calcium (Ca), sourced as metal sulfates, along with urea. It was found that presence of metal sulfates in the granule reduces urea nitrogen volatilization. Multiple nutrients can be provided with a single application by using the fertilizer granules described herein. Further, due to reduced urea nitrogen volatilization, nitrogen utilization efficiency of the fertilizing process can also be increased by using the fertilizer granules described herein.

One aspect of the present invention is directed to a fertilizer granule. The fertilizer granule comprises a homogeneous mixture comprising 10 to 48 wt. % urea and 52 to 90 wt. % langbeinite, the weight percentages based on the total weight of the homogeneous mixture; wherein the fertilizer granule comprises less than 0.1 wt.% or no crystalline adduct having the formula of $CaSO_4.4CO(NH_2)_2$. In some aspects, the homogeneous mixture can further contain calcium (Ca). In some particular aspects, the homogeneous mixture can contain 0.1 to 15 wt. % of Ca. The fertilizer granule can be essentially free of an adduct having the formula of $CaSO_4.4CO(NH_2)_2$. The fertilizer granule can be essentially free of a crystalline adduct having the formula of $CaSO_4.4CO(NH_2)_2$. The fertilizer granule comprises less than 0.1 wt. % or no crystalline adduct having the formula of $CaSO_4.4CO(NH_2)_2$. The fertilizer granule comprises less than 0.1 wt. % of a crystalline adduct having the formula of $CaSO_4.4CO(NH_2)_2$. In some instances, the fertilizer granule is free of a starch, polysaccharide, and/or other binder. In some instances, the fertilizer granule can have less than 5, 4, 3, 2, 1, 0.5, or 0.1 wt. % of a starch, polysaccharide, binder, or combination thereof.

In some aspects, the homogeneous mixture can be an amorphous or non-crystalline mixture containing urea, sulfate, K, Mg, and optionally Ca. In some aspects, the urea, sulfate, K, Mg, and optionally Ca can be present in a same layer or within a core within the fertilizer granule. In some aspects, the homogeneous mixture can contain 6 to 10 wt. % of Mg, 11 to 20 wt. % of K, 1 to 11 wt. % of Ca, urea in an amount providing 5 to 22 wt. % of N, and sulfate in an amount providing 11 to 20 wt. % of S, based on the total weight of the mixture.

The i) sulfate, and ii) Mg, K, and/or Ca in the homogeneous mixture is sourced from langbeinite and optionally one or more sulfate salts. Non-limiting examples of the sulfate salts can include $K_2SO4$, $CaSO_4$, $MgSO_4$, $K_2Ca_2Mg(SO_4)_4$, and/or $K_2Mg_2(SO_4)_3$. In some aspects, the homogeneous mixture can contain a moles of K, b moles of Ca, c moles of Mg, and d moles of S, wherein the moles of K (a), Ca (b), Mg (c) and S (d) satisfy: d is $\geq 0.9 \times ((a/2) + b + c)$, where a, b, c, and d are positive real numbers; b is zero or a positive real number; and a, b, and/or c, are the same or different. In some

instances, d is $\geq 0.95 \times ((a/2) + b + c)$. In some instances d is $\geq 0.98 \times ((a/2) + b + c)$. In some instances, d is $\geq 0.99 \times ((a/2) + b + c)$. In some instances, d is equal to $((a/2) + b + c)$. In some aspects, the sulfate salt can contain sulfate and at least two of Ca, Mg, and K. The homogeneous mixture can optionally contain chlorine (Cl). The homogeneous mixture can optionally contain non-sulfate salts of Ca, Mg, and/or K.

In some aspects, the homogeneous mixture can contain urea, langbeinite and $K_2Ca_2Mg(SO_4)_4$. In some aspects, the homogeneous mixture can further contain crystalline $K_2Ca_2Mg(SO_4)_4$. In some particular aspects, the homogeneous mixture can be prepared from urea, langbeinite and $K_2Ca_2Mg(SO_4)_4$. In some particular aspects, the homogeneous mixture can be prepared from urea and $K_2Ca_2Mg(SO_4)_4$ at a weight ratio of 5:95 to 95:5, provided the weight percentage of urea and langbeinite in the homogeneous mixture is as defined in the claims. In some particular aspects, the homogeneous mixture can be prepared from urea and $K_2Ca_2Mg(SO_4)_4$ at a weight ratio of about 5:95, 10:90, 20:80, 30:70, 32:68; 40:60, 48:52, 50:50, 58:42, 60:40, 70:30, 72:28; 80:20, 87:13, 90:10, or 95:5, provided the weight percentage of urea and langbeinite in the homogeneous mixture is as defined in the claims. In some instances, the $K_2Ca_2Mg(SO_4)_4$ is polyhalite and/or poly4 minerals.

In some aspects, the homogeneous mixture can contain urea, langbeinite and $K_2Mg_2(SO_4)_3$. In some aspects, the homogeneous mixture can further contain crystalline $K_2Mg_2(SO_4)_3$. In some particular aspects, the homogeneous mixture can be prepared from urea, langbeinite and $K_2Mg_2(SO_4)_3$. In some particular aspects, the homogeneous mixture can be prepared from urea and $K_2Mg_2(SO_4)_3$ at a weight ratio of 5:95 to 95:5, provided the weight percentage of urea and langbeinite in the homogeneous mixture is as defined in the claims. In some particular aspects, the homogeneous mixture can be prepared from urea and $K_2Mg_2(SO_4)_3$ at a weight ratio of about 5:95, 10:90, 20:80, 30:70, 32:68; 40:60, 48:52, 50:50, 58:42, 60:40, 70:30, 72:28; 80:20, 87:13, 90:10, or 95:5, provided the weight percentage of urea and langbeinite in the homogeneous mixture is as defined in the claims. In some instances, the $K_2Mg_2(SO_4)_3$ is langbeinite.

In some aspects, the homogeneous mixture can contain urea, langbeinite, $K_2Ca_2Mg(SO_4)_4$ and $K_2Mg_2(SO_4)_3$. In some aspects, the homogeneous mixture can further contain crystalline $K_2Ca_2Mg(SO_4)_4$ and/or crystalline $K_2Mg_2(SO_4)_3$. In some particular aspects, the homogeneous mixture can be prepared from urea, langbeinite, $K_2Ca_2Mg(SO_4)_4$, and $K_2Mg_2(SO_4)_3$. In some particular aspects, the homogeneous mixture can be prepared from urea to $K_2Ca_2Mg(SO_4)_4$ at a weight ratio of 5:45 to 95:5, provided the weight percentage of urea and langbeinite in the homogeneous mixture is as defined in the claims. In some particular aspects, the homogeneous mixture can be prepared from urea to $K_2Mg_2(SO_4)_3$ at a weight ratio of 5:45 to 95:5, provided the weight percentage of urea and langbeinite in the homogeneous mixture is as defined in the claims. In some particular aspects, the homogeneous mixture can be prepared from $K_2Mg_2(SO_4)_3$ to $K_2Ca_2Mg(SO_4)_4$ weight ratio of 8:10 to 10:8. In some particular aspects, the homogeneous mixture can be prepared from langbeinite and two or three of i) urea to $K_2Ca_2Mg(SO_4)_4$ at a weight ratio of 5:45 to 95:5; ii) urea to $K_2Mg_2(SO_4)_3$ at a weight ratio of 5:45 to 95:5; and iii) $K_2Mg_2(SO_4)_3$ to $K_2Ca_2Mg(SO_4)_4$ weight ratio of 8:10 to 10:8, provided the weight percentage of urea and langbeinite in the homogeneous mixture is as defined in the claims. In some particular aspects, the homogeneous mixture can be prepared from urea, $K_2Ca_2Mg(SO_4)_4$, and $K_2Mg_2(SO_4)_3$ at a weight ratio of 5:47.5:47.5 to 95:2.5:2.5. In some particular aspects, the homogeneous mixture can be prepared from urea, langbeinite, $K_2Ca_2Mg(SO_4)_4$, and $K_2Mg_2(SO_4)_3$ at a weight ratio of about 5:47.5:47.5, 10:45:45, 20:40:40, 30:35:35, 40:30:30, 50:25:25, 60:20:20, 70:15:15, 80:10:10, 90:5,5, or 95:2.5:2.5, provided the weight percentage of urea and langbeinite in the homogeneous mixture is as defined in the claims.

The fertilizer granule can comprise 85 wt. % or greater, 90 wt. % or greater, 95 wt. % or greater, 97 wt. % or greater, or 98 wt. % or greater, or 99 wt. % or greater, or 99.5 wt. % or greater, or about 100 wt. % of the homogeneous mixture. Total wt. % of urea, sulfate, K, Mg, and Ca in the homogeneous mixture can be 80 wt. % or greater, 85 wt. % or greater, 90 wt. % or greater, 95 wt. % or greater, or 97 wt. % or greater, or 98 wt. % or greater, or 99 wt. % or greater, provided the weight percentage of urea and langbeinite in the homogeneous mixture is as defined in the claims.

The fertilizer granule can have a urea stability and crushing strength higher than a reference granule containing urea without a metal sulfate. In some aspects, the fertilizer granule can have a crushing strength greater than 2 kg/granule, or equal to or greater than 2.3 kg/granule, or 2.5 kg to 3.5 kg/granule. In some aspects, the fertilizer granule at its widest dimension can be 0.5 to 6 mm, preferably 1 to 5 mm, more preferably 1 to 4 mm.

The fertilizer granule can optionally contain a coat. In certain aspects, the homogeneous mixture can form a core of the fertilizer granule, and the optional coat can form a coating over an outer surface of the core. The coat can cover all or a portion of the core. The coat can contain one or more inhibitors, one or more micronutrients, humic acid, granulation aids, or any combinations thereof. The one or more inhibitors can include an urease inhibitor and/or a nitrification inhibitor. In some instances, the urease inhibitor can be a thiophosphoric triamide derivative or phenyl phosphorodiamidate (PPDA). In some particular instances, the thiophosphoric triamide derivative can be N-(n-butyl) thiophosphoric triamide (NBPT). In some instances, the nitrification inhibitor can be 3,4-dimethylpyrazole phosphate (DMPP), thio-urea (TU), dicyandiamide (DCD), 2-Chloro-6-(trichloromethyl)-pyridine (Nitrapyrin), 5- Ethoxy-3-trichloromethyl -1, 2, 4-thiadiazol (Terrazole), 2-Amino-4-chloro-6-methyl- pyrimidine (AM), 2-Mercapto-benzothiazole (MBT), or 2-Sulfanimalamidothiazole (ST) or any combinations thereof. In some instances, the nitrification inhibitor can be DCD.

A composition may comprise the fertilizer granule. The fertilizer granule can be included in a fertilizer blend or a compounded fertilizer. The fertilizer blend or the compounded fertilizer in addition to the fertilizer granules can contain a second fertilizer. The second fertilizer can contain urea, monoammonium phosphate (MAP), diammonium phosphate (DAP), muriate of potash (MOP), monopotassium phosphate (MKP), triple super phosphate (TSP), rock phosphate, single super phosphate (SSP), or the like.

One aspect is directed to a method of making a fertilizer granule described herein. The method comprises: contacting a feed mixture, said feed mixture comprising langbeinite, urea and optionally a Ca source, with water and granulating the feed mixture in presence of a low pressure steam to form a wet granulated mixture; drying the wet granulated mixture to form a heated granulated mixture; and cooling the heated granulated mixture to form a cooled granulated mixture comprising the fertilizer granule.

In some instances, the wet granulation mixture is dried with a hot air stream. In some instances, the heated granulation mixture is cooled with an air stream.

The feed mixture comprises i) urea ii) langbeinite and optionally iii) one or more sulfate salt(s). The sulfate salt(s) can contain i) sulfate, and ii) Mg, K and/or optionally Ca. In some aspects, the sulfate salt(s) can contain at least two of Ca, Mg, and K. In some aspects, the one or more sulfate salt(s) can be selected from $CaSO_4$, $MgSO_4$, $K_2SO4$, $K_2Mg_2(SO_4)_3$, and/or $K_2Ca_2Mg(SO_4)_4$. The salt(s) can be, independently, added in hydrated form or as non-hydrates. The feed mixture can optionally further contain K, Mg, and/or Ca that are not or are not from sulfate salts. The feed mixture can optionally further contain KCl. In some aspects, the feed mixture can contain urea, langbeinite, $CaSO_4$, $MgSO_4$, and/or $K_2SO_4$. In some aspects, the feed mixture can contain and/or can be prepared by adding urea, langbeinite and $K_2Ca_2Mg(SO_4)_4$. In some particular aspects, the feed mixture can contain and/or can be prepared by adding urea and $K_2Ca_2Mg(SO_4)_4$ at a weight ratio of 5:95 to 95:5, provided the weight percentage of urea and langbeinite in the homogeneous mixture is as defined in the claims. In some aspects, $K_2Ca_2Mg(SO_4)_4$ can be added as polyhalite and/or poly4 minerals. In some aspects, the feed mixture can contain and/or can be prepared by adding urea, langbeinite and $K_2Mg_2(SO_4)_3$. In some particular aspects, the feed mixture can contain and/or can be prepared by adding urea and $K_2Mg_2(SO_4)_3$, at a weight ratio of 5:95 to 95:5, provided the weight percentage of urea and langbeinite in the homogeneous mixture is as defined in the claims. In some aspects, $K_2Mg_2(SO_4)_3$ can be added as langbeinite. In some aspects, the feed mixture can contain and/or can be prepared by adding urea, langbeinite, $K_2Ca_2Mg(SO_4)_4$, and $K_2Mg_2(SO_4)_3$. In some particular aspects, the feed mixture can contain and/or can be prepared by adding urea, $K_2Ca_2Mg(SO_4)_4$, and $K_2Mg_2(SO_4)_3$, with i) urea to $K_2Ca_2Mg(SO_4)_4$ weight ratio of 5:45 to 95:5, ii) urea to $K_2Mg_2(SO_4)_3$ weight ratio of 5:45 to 95:5, and iii) $K_2Mg_2(SO_4)_3$ to $K_2Ca_2Mg(SO_4)_4$ weight ratio at a weight ratio of about, or in between any two of 8:10, 9:10, 10:10, 10:9 or 10:8, provided the weight percentage of urea and langbeinite in the homogeneous mixture is as defined in the claims.

The feed mixture can be in a particulate form. In some aspects, prior to granulation, the feed mixture can be ground. In some aspects, the feed mixture is passed through one or more size screens. In some aspects, the feed mixture is blended to obtain a homogeneous feed mixture. In some aspects, the homogeneous feed mixture can have an average particle size of 10 $\mu$m to 100 $\mu$m. In some aspects, at least a portion of the particles rejected by the one or more size screens can be recycled and mixed with the feed mixture (e.g. feed mixture of a different batch).

In some aspects, the feed mixture can be granulated by an agglomeration process. In the granulation step, the feed mixture can be granulated in presence of water comprised in low pressure steam. In some aspects, the low pressure steam can have a pressure of 3.5 bar to 4.5 bar and/or a temperature of 150 °C to 200 °C. In some aspects, the wet granulated mixture can be dried by contact with a hot air stream. The hot air stream can have a temperature of 120 °C to 130 °C. In some aspects, the wet granulated mixture can be dried with an air stream that can be an ambient temperature (e.g. 15 °C to 35 °C, or 20 °C to 30 °C) air stream. In some aspects, during drying of the wet granulated mixture, the hot air stream/ambient air stream and the wet granulated mixture can have a co-current flow. In some aspects, during cooling of the heated granulated mixture, the heated granulated mixture can be cooled using an air stream. In some instances, the cooling air stream and the heated granulated mixture can have a counter-current flow.

In some aspects, dusts generated during the granulation step (e.g. step ii) and/or drying step (e.g. step iii) can be separated from the atmosphere of the granulation step or drying step using a first dry separator. In some aspects, dusts generated during the cooling step (e.g. step iv) can be separated from the atmosphere of the cooling step using a second dry separator. In some instances, the method uses one or both of either of the first dry separator and/or the second dry separator. In some aspects, the first dry separator can include cyclone separators and/or bag filters. In some aspects, the second dry separator can include cyclone separators and/or bag filters.

One aspect of the present invention is directed to a method of fertilizing, the method comprising applying the fertilizer granule and/or a fertilizer blend containing the fertilizer granule to at least a portion of a soil, a crop, or the soil and the crop. Also disclosed is a method of enhancing plant growth comprising applying to soil, the plant, or the soil and the plant an effective amount of a composition comprising the fertilizer granule and/or the fertilizer blend of the present invention. The fertilizer granule and/or the fertilizer blend containing the fertilizer granule can be applied to the soil, crop, or soil and crop as a top dressing fertilizer.

As used herein, a "reference granule containing urea without a metal sulfate" is a granule that includes the same components, and the same amounts of the components, as the example composition, except that the reference composition does not include metal sulfates. Where a metal sulfate is removed, the wt. % of the removed metal sulfate is added as urea in the reference granule. Thus, if an example fertilizer granule contains 85 wt. % urea, 4 wt. % of $CaSO_4$, 4 wt. % of $MgSO_4$, 4 wt. % $K_2SO_4$, 2.5 wt. % of KCl, and 0.5 wt. % of moisture, a reference granule contains 97 wt. % of urea, 2.5 wt. % of KCl, and 0.5 wt. % of moisture.

In the context of the present invention, fertilizer granules and/or fertilizer blend granules may also be referred to as a particle, granule, fertilizer particle, prill, or fertilizer prill.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "aqueous based," "aqueous base," "water based," and "water base" are defined as containing water or was previously contained in water before drying.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The phrase "and/or" can include "and" or "or." To illustrate, A, B, and/or C can include: A alone, B alone, C alone, a combination of A and B, a combination of A and C, a combination of B and C, or a combination of A, B, and C.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

## BRIEF DESCRIPTION OF THE DRAWINGS

Advantages of the present invention may become apparent to those skilled in the art with the benefit of the following detailed description and upon reference to the accompanying drawings. While the invention is susceptible to various modifications and alternative forms, specific embodiments thereof are shown by way of example in the drawings. The drawings may not be to scale.

FIG. 1 A) A fertilizer granule according to one example of the present invention. B) A fertilizer granule according to another example of the present invention. FIG. 1A and 1B show a cross-sectional view, e.g. along a plane perpendicular to a long axis, of the fertilizer granules.

FIG. 2A and 2B are schematics of systems and processes according to two examples of the present invention, for producing a fertilizer granule.

## DETAILED DESCRIPTION OF THE INVENTION

The fertilizer granule of the present invention comprises urea langbeinite, and optionally calcium (Ca). As illustrated in the Examples, it was found that the fertilizer granules of the present invention can have higher urea stability and crushing strength compared to reference granules containing urea without the weight percentage of urea and langbeinite as defined in the claims.

These and other aspects of the present invention are discussed in further detail in the following sections.

## A. Fertilizer Granules

The fertilizer granule comprises a homogeneous mixture comprising urea, langbeinite, and optionally calcium (Ca). In some aspects, the homogeneous mixture can be an amorphous mixture containing the urea, langbeinite, and optional Ca. The homogeneous mixture and/or fertilizer granule can contain i) urea in an amount providing 3 to 45 wt. %, or 5 to 41 wt. %, or at least any one of, equal to any one of, or between any two of 3, 5, 10, 15, 20, 25, 30, 35, 40, 41, and 45 wt. % of nitrogen (N), ii) sulfate in an amount providing 2 to 25 wt. %, or 5 to 20 wt. %, or at least any one of, equal to any one of, or between any two of 2, 4, 6, 8, 10, 12, 14, 16, 18, 20, 22, 24. and 25 wt. % of sulfur (S), iii) 0.1 to 15 wt. %, or 0.4 to 10 wt. %, or at least any one of, equal to any one of, or between any two of 0.1, 0.3, 0.4, 0.5, 1, 2, 4, 6, 8, 10, 12, 14, and 15 wt. % of Mg; iv) 0.1 to 25 wt. %, 0.5 wt. % to 20 wt. % or at least any one of, equal to any one of, or between any two of 0.1, 0.5, 1, 2, 4, 6, 8, 10, 12, 14, 16, 18, 20, 22, 24, and 25 wt. % of K, and v) optionally 0.1 to 15 wt. %, or 1 to 11 wt. %, or at least any one of, equal to any one of, or between any two of 0.1, 0.5, 1, 2, 4, 6, 8, 10, 11, 12, 14, and 15 wt. % of Ca, based on the total weight of the homogeneous mixture and/or fertilizer granule respectively, provided the weight percentage of urea and langbeinite in the homogeneous mixture is as defined in the claims. The total wt. % of the combined sulfate, urea, Mg, K, and optionally also including Ca in the homogeneous mixture and/or the fertilizer granule can be 85 wt. % to 100 wt. %, or at least any one of, equal to any one of, or between any two of 85, 86, 87, 88, 89, 90, 91, 92, 93, 94, 95, 96, 97, 98, 99, 99.5, and 100 wt. %, based on the total weight of the homogeneous mixture and/or the fertilizer granule, respectively, provided the weight percentage of urea and langbeinite in the homogeneous mixture is as defined in the claims. Moisture content of the homogeneous mixture and/or the fertilizer granule can be, less than 1 wt. %, preferably 0.7 wt. % or less, such as 0.7 wt. % to 0.5 wt. %, based on the total weight of the homogeneous mixture and/or the fertilizer granule respectively.

The fertilizer granule comprises less than 0.1 wt. % or no crystalline adduct having the formula of $CaSO_4 \cdot 4CO(NH_2)_2$. In some instances, the fertilizer granule is essentially free of, or free of, or contains less than 5 wt. %, or less than 3 wt. %, or less than 1 wt. %, or less than 0.5 wt. %, or less than 0.1 wt. %, of a starch, polysaccharide, and/or other binder.

In some aspects, the homogeneous mixture comprises i) a moles of K, ii) b moles of Ca, iii) c moles of Mg, and iv) d moles of S, wherein d is $\geq 0.9 \times ((a/2) + b + c)$, or $\geq 0.95 \times ((a/2) + b + c)$, or $\geq 0.98 \times ((a/2) + b + c)$, or $\geq 0.99 \times ((a/2) + b + c)$, or $((a/2) + b + c)$. Where a, c, and d are positive real numbers; b is zero or a positive real number; and a, b, and/or c, are the same or different. In some aspects, 80 wt. % to 100 wt. %, or at least any one of, equal to any one of, or between any two of 80, 81, 82, 83, 84, 85, 86, 87, 88, 89, 90, 91, 92, 93, 94, 95, 96, 97, 98, 99, 99.5, and 100 wt. % of the fertilizer granule can be comprised of the homogeneous mixture.

The homogeneous mixture comprises urea and langbeinite. In some aspects, the Mg, K, and Ca in the homogeneous mixture can be further sourced as sulfates. In some aspects, the homogeneous mixture can contain one or more sulfate salts selected from $CaSO_4$, $MgSO_4$, $K_2SO_4$, $K_2Mg_2(SO_4)_3$, and/or $K_2Ca_2Mg(SO_4)_4$. The homogeneous mixture can optionally further contain Cl. The homogeneous mixture can optionally further contain non-sulfate salts of Ca, Mg, and/or K. The homogeneous mixture can optionally further contain KCl. In some aspects, the homogeneous mixture can further contain $K_2Ca_2Mg(SO_4)_4$. In some particular aspects, the homogeneous mixture can be prepared from urea and $K_2Ca_2Mg(SO_4)_4$ at a weight ratio of 5:95 to 95:5, or at least any one of, equal to any one of, or between any two of 5:95, 10:90, 20:80, 30:70, 32:68; 40:60, 48:52, 50:50, 58:42, 60:40, 70:30, 72:28; 80:20, 87:13, 90:10, or 95:5, provided the weight percentage of urea and langbeinite in the homogeneous mixture is as defined in the claims. In some aspects, the homogeneous mixture can further contain $K_2Mg_2(SO_4)_3$. In some particular aspects, the homogeneous mixture can be prepared from urea and $K_2Mg_2(SO_4)_3$ at a weight ratio of 5:95 to 95:5, or at least any one of, equal to any one of, or between any two of 5:95, 10:90, 20:80, 30:70, 32:68; 40:60, 48:52, 50:50, 58:42, 60:40, 70:30, 72:28; 80:20, 87:13, 90:10, or 95:5, provided the weight percentage of urea and langbeinite in the homogeneous mixture is as defined in the claims. In some aspects, the homogeneous mixture can further contain $K_2Ca_2Mg(SO_4)_4$, and $K_2Mg_2(SO_4)_3$. In some aspects, the homogeneous mixture can be prepared from urea, langbeinite, $K_2Ca_2Mg(SO_4)_4$, and $K_2Mg_2(SO_4)_3$ with i) urea to $K_2Ca_2Mg(SO_4)_4$ weight ratio of 5:45 to 95:5, or at least any one of, equal to any one of, or between any two of 5:45; 10:45; 20:40; 30:35; 40:30; 50: 25; 60:20; 70:15; 80:10; 90:5 and 95:5, ii) urea to $K_2Mg_2(SO_4)_3$ weight ratio of 5:45 to 95:5, or at least any one of, equal to any one of, or between any two of 5:45; 10:45; 20:40; 30:35; 40:30; 50: 25; 60:20; 70:15; 80:10; 90:5 and 95:5, and iii) $K_2Mg_2(SO_4)_3$ to $K_2Ca_2Mg(SO_4)_4$ weight ratio of 8:10 to 10:8, or at least any one of, equal to any one of, or between any two of 8:10, 9:10, 10:10, 10:9, and 10:8, provided the weight percentage of urea and langbeinite in the homogeneous mixture is as defined in the claims. In some particular aspects, the homogeneous mixture can be prepared from urea, $K_2Ca_2Mg(SO_4)_4$, and $K_2Mg_2(SO_4)_3$ at a weight ratio of equal to any one of, or between any two of 5:47.5:47.5, 10:45:45, 20:40:40, 30:35:35, 40:30:30, 50:25:25, 60:20:20, 70:15:15, 80:10:10, 90:5,5, or 95:2.5:2.5, provided the weight percentage of urea and langbeinite in the homogeneous mixture is as defined in the claims.

The fertilizer granule can optionally contain a coat. In certain aspects, the homogeneous mixture can form a core of the fertilizer granule, and the optional coat can form a coating over an outer surface of the core. The coat can contain one or more inhibitors, one or more micronutrients, humic acid, granulation aids, or any combinations thereof. The one or more inhibitors can include an urease inhibitor and/or a nitrification inhibitor. In some aspects, the urease inhibitor can contain a thiophosphoric triamide derivative or phenyl phosphorodiamidate (PPDA). In some particular aspects, the thiophosphoric triamide derivative can be N-(n-butyl) thiophosphoric triamide (NBPT). In some aspects, the nitrification inhibitor can be 3,4-dimethylpyrazole phosphate (DMPP), thio-urea (TU), dicyandiamide (DCD), 2-Chloro-6-(trichloromethyl)-pyridine (Nitrapyrin), 5- Ethoxy-3-trichloromethyl -1, 2, 4-thiadiazol (Terrazole), 2-Amino-4-chloro-6-methyl- pyrimidine (AM), 2-Mercapto-benzothiazole (MBT), or 2-Sulfanimalamidothiazole (ST) or any combinations thereof, preferably DCD. A micronutrient can be a botanically acceptable form of an inorganic or organometallic compound such as boron, copper, iron, chloride, manganese, molybdenum, nickel, or zinc. Non-limiting examples of granulation aids that can be used includes calcium lignosulfonate, such as calcium lignosulfonate at 0.3 to 0.5 wt. % of the fertilizer granule. The coat can contain one or more coating layers. The coat overall can cover 5 to 100 %, or at least any one of, equal to any one of, or between any two of 5, 10, 15, 20, 25, 30, 35, 40, 45, 50, 55, 60, 65, 70, 75, 80, 85, 90, 95, 99, and 100 % of an outer surface of the core.

The fertilizer granule can be of any suitable shape. Non-limiting shapes include spherical, cuboidal, cylindrical, puck shape, oval, and oblong shapes. In some aspects, the fertilizer granule can be of cylindrical shape with a circular, elliptical, ovular, triangular, square, rectangular, pentagonal, or hexagonal cross section, although cylindrical shaped core having a cross-section of other shapes can also be made. In some aspects, the fertilizer granule at its widest dimension can be 0.5 mm to 6 mm, or 0.5 mm to 5 mm, preferably 1 mm to 4 mm, or at least any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm. In some particular aspects, the fertilizer granule can have a substantially spherical shape with an average diameter 0.5 mm to 6 mm, or 0.5 mm to 5 mm, preferably 1 mm to 4 mm, or at least any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm.

The homogeneous mixture can have a compositional make-up that is substantially homogeneous. In some instances, a compositional make-up for a 0.5 mm $\times$ 0.5 mm $\times$ 0.5 mm cube at any position of the mixture can be similar (within $\pm$ 10 %, or $\pm$ 5 %, or $\pm$ 3 %, $\pm$ 2 %, or $\pm$ 1 %, or $\pm$ 0.5 %) to that of a 0.5 mm $\times$ 0.5 mm $\times$ 0.5 mm cube at any other position of the mixture.

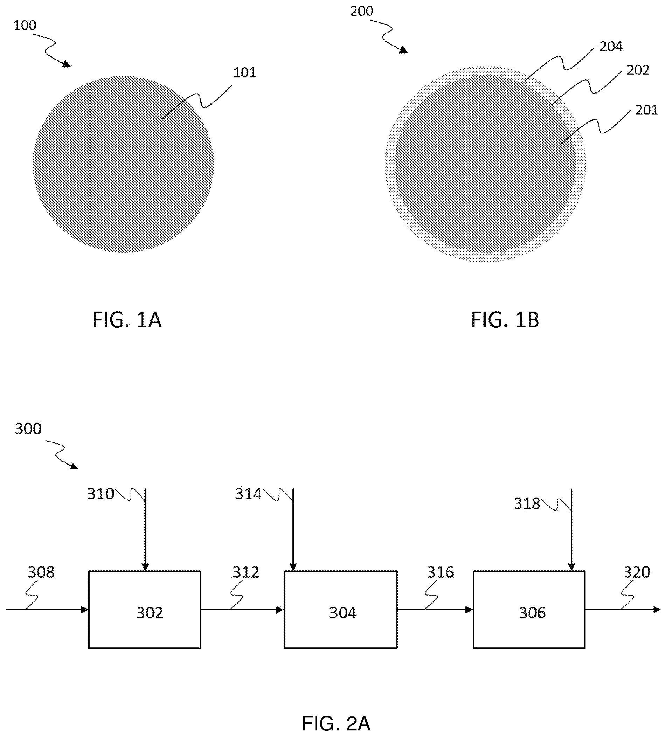

Referring to FIG. 1A, a fertilizer granule **100** according to one example of the present invention is shown. The fertilizer granule **100** comprises homogeneous mixture **101.**

Referring to FIG. 1B, a fertilizer granule **200** according to a second example of the present invention is shown. The fertilizer granule **200** can contain a core **202** and coat **204.** The core **202** can contain an homogeneous mixture **201.** The coat **204** is represented as covering the entire outer surface of the core **202,** although fertilizer granules with the coat **204** covering a portion of the outer surface of the core **202** can readily be made.

The homogeneous mixture **101, 201,** and/or coat **202** can have compositions as described above.

In some aspects, additional fertilizer substances can be included or excluded in the fertilizer granules. If included, additional fertilizers can be chosen based on the particular needs of certain types of soil, climate, or other growing conditions to maximize the efficacy of the fertilizer granule in enhancing plant growth and crop yield. Additional additives may also be included or excluded in the fertilizer granules. Non-limiting examples of additives that can be included or excluded from the fertilizer granules of the present invention include micronutrients, additional nitrogen nutrients, and/or additional secondary nutrients. The micronutrient can be boron, copper, iron, chloride, manganese, molybdenum, nickel, or zinc or any combinations thereof. An additional nitrogen nutrient can be a nutrient other than urea, that can deliver nitrogen to a plant. In some aspects, the additional nitrogen nutrient can include ammonium nitrate, ammonium sulfate, diammonium phosphate, monoammonium phosphate, urea-formaldehyde, ammonium chloride, and potassium nitrate. In some aspects, the additional secondary nutrients may include lime, and/or a superphosphate.

The fertilizer granules can have desirable physical properties such as desired levels of abrasion resistance, granule strength, pelletizability, hygroscopicity, granule shape, and size distribution.

The fertilizer granules described herein can be comprised in a composition useful for application to soil. In addition to the fertilizer granules, the composition may include other fertilizer compounds, micronutrients, primary nutrients, additional urea, additional nitrogen nutrients, insecticides, herbicides, or fungicides, or combinations thereof.

The fertilizer granules described herein can also be included in a blended composition comprising other fertilizers. The other fertilizer can be monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

## B. Method of Making a Fertilizer Granule

One aspect of the present invention is directed to a method for making a fertilizer granule, such as a fertilizer granule described herein.

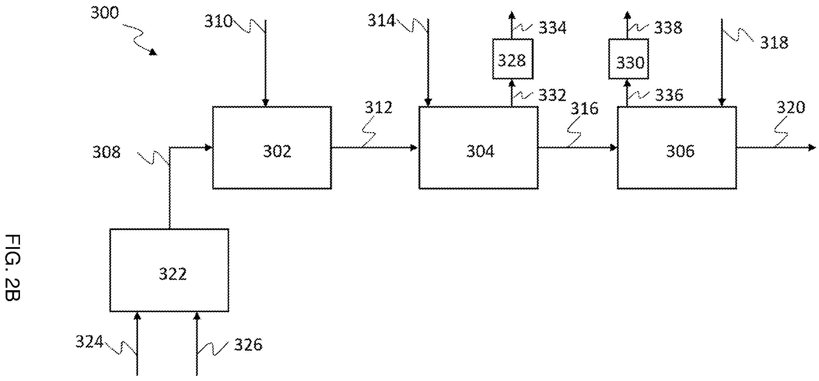

Referring to FIG. 2A and 2B, systems and methods for producing a fertilizer granule according to two examples are described. The system 300 can include a granulator 302, a dryer 304, and a cooler 306. A feed 308 containing urea, langbeinite, optional sulfate, Mg, K, and optionally Ca, and a low pressure steam 310 can be fed to the granulator 302. In the granulator, the feed 308 is contacted with the low pressure steam 310 and can be granulated to form a wet granulated mixture 312. The wet granulated mixture 312 from the granulator 302, and a hot air stream 314 can be fed to the dryer 304. In the dryer 304 the wet granulated mixture 312 can be dried in presence of the hot air stream 314 to form a heated granulated mixture 316. In certain aspects, the wet granulated mixture 312 and the hot air stream 314 can have co-current flow in the dryer 304. The heated granulated mixture 316 from the dryer 304, and an air stream 318 can be fed to the cooler 306. In the cooler 306 the heated granulated mixture 316 can be cooled in the presence of the air 318 to form a cooled granulated mixture 320 containing the fertilizer granule.

In certain aspects, particles having a size larger or smaller than a desired size can be separated from the heated granulated mixture 316 and/or the cooled granulated mixture 320. In some instances, at least a portion of the separated particles can be recycled back to the granulator 302. Particles having a size larger than the desired size can be crushed and/or ground prior to feeding to the granulator. The desired size for the heated granulated mixture can be same or different than the cooled granulated mixture.

Referring to FIG. 2B in certain aspects, the system can further contain a mixing and grinding unit 322, a first dry separator 328, and a second dry separator 330. Urea 324, langbeinite, and one or more sulfate salt(s) 326 can be fed to the mixing and grinding unit 322. The one or more sulfate salt(s) can contain (e.g. independently) K, Mg, and/or Ca. In the unit 322, urea, langbeinite, and the one or more sulfate salt(s) can be ground, passed through one or more size screens, and mixed to form a homogeneous feed mixture 308. The homogeneous feed mixture 308 from the mixing and grinding unit 322 can be fed to the granulator 302. In certain aspects, dusts generated during the granulation step (e.g. in the granulator 302) and/or in the drying step (e.g. in the dryer 304), can be removed using the first dry separator 328. A dust containing stream 332 from the dryer 304 can be passed through the first dry separator 328. In the first dry separator 328 the dusts from stream 332 can be captured. In some aspects, a stream 334 from the first dry separator 328 containing residual dust materials can be passed through a scrubber solution to capture at least a portion of the residual dusts (not shown). In some aspects, the first dry separator 328 can include cyclone separators and/or bag filters. In certain aspects, dusts generated during the cooling step (e.g. in the cooler 306) can be removed with the second dry separator 330. A dust containing stream 336 from the cooler 306 can be passed through the second dry separator 330. In the second dry separator 330 dusts from stream 336 can be captured. In some aspects, a stream 338 from the second dry separator 330 containing residual dust materials can be passed through a scrubber solution to capture at least a portion of the residual dusts (not shown). In some aspects, the second dry separator can include cyclone separators and/or bag filters.

In certain aspects, the homogeneous feed mixture, wet granulated mixture, heated granulated mixture, and/or cooled granulated mixture can be coated with a coat containing one or more of inhibitors, one or more of micronutrients, humic acid, granulation aids, or any combinations thereof.

The homogeneous feed mixture 308 comprises i) urea ii) langbeinite and optionally iii) one or more sulfate salt(s). In some aspects, the sulfate salt(s) can be a mixed salt containing sulfate and at least two of Ca, Mg, and K. In some aspects, the one or more sulfate salt(s) can be selected from $CaSO_4$, $MgSO_4$, $K_2SO_4$, $K_2Mg_2(SO_4)_3$, and/or $K_2Ca_2Mg(SO_4)_4$. The salt(s) can be added, independently, as a hydrate or a non-hydrate. The feed mixture 308 can optionally contain non-sulfate salts of K, Mg, and/or Ca. The feed mixture 308 can optionally contain KCl. In some aspects, the feed mixture can contain urea, $CaSO_4$, $MgSO_4$, and/or $K_2SO_4$. In some aspects, the feed mixture can contain and/or can be prepared by adding urea, langbeinite and $K_2Ca_2Mg(SO_4)_4$. In some particular aspects, the feed mixture can contain and/or can be prepared by adding urea and $K_2Ca_2Mg(SO_4)_4$ at a weight ratio of 5:95 to 95:5, or at least any one of, equal to any one of, or between any two of 5:95, 10:90, 15:85, 20:80, 25:75, 30:70, 32:68, 35:65, 40:60, 45:55, 50:50, 55:45, 58:42, 60:40, 65:35, 70:30, 72:28, 75:25, 80:20, 85:15, 87:13, 90:10, and 95:5. In some aspects, $K_2Ca_2Mg(SO_4)_4$ can be added as polyhalite and/or poly4 minerals. In some aspects, the feed mixture 308 can contain and/or can be prepared by adding urea and $K_2Mg_2(SO_4)_3$. In some particular aspects, the feed mixture can contain and/or can be prepared by adding urea and $K_2Mg_2(SO_4)_3$ at a weight ratio of 5:95 to 95:5 or at least any one of, equal to any one of, or between any two of 5:95, 10:90, 15:85, 20:80, 25:75, 30:70, 32:68, 35:65, 40:60, 45:55, 48:52, 50:50, 55:45, 58:42, 60:40, 65:35, 70:30, 72:28, 75:25, 80:20, 85:15, 87:13, 90:10, and 95:5. In some aspects, $K_2Mg_2(SO_4)_3$ can be added as langbeinite. In some aspects, the feed mixture can contain and/or can be prepared by adding urea, $K_2Ca_2Mg(SO_4)_4$, and $K_2Mg_2(SO_4)_3$. In some particular aspects, the feed mixture can contain and/or can be prepared by adding urea, $K_2Ca_2Mg(SO_4)_4$, and $K_2Mg_2(SO_4)_3$, with i) urea to $K_2Ca_2Mg(SO_4)_4$ weight ratio of 5:45 to 95:5, or at least any one of, equal to any one of, or between any two of 5:45; 10:45; 20:40; 30:35; 40:30; 50:25; 60:20; 70:15; 80:10; 90:5 and 95:5, ii) urea to $K_2Mg_2(SO_4)_3$ weight ratio of 5:45 to 95:5, or at least any one of, equal to any one of, or between any two of 5:45; 10:45; 20:40; 30:35; 40:30; 50:25; 60:20; 70:15; 80:10; 90:5 and 95:5, and iii) $K_2Mg_2(SO_4)_3$ to $K_2Ca_2Mg(SO_4)_4$ weight ratio of 8:10 to 10:8, or at least any one of, equal to any one of, or between any two of 8:10, 9:10, 10:10, 10:9, and 10:8. In some particular aspects, the homogeneous mixture can be prepared from urea, $K_2Ca_2Mg(SO_4)_4$, and $K_2Mg_2(SO_4)_3$ at a weight ratio of equal to any one of, or between any two of 5:47.5:47.5, 10:45:45, 20:40:40, 30:35:35, 40:30:30, 50:25:25, 60:20:20, 70:15:15, 80:10:10, 90:5,5, or 95:2.5:2.5. The homogeneous feed mixture 308 can have an average particle size of 10 μm to 100 μm, or at least any one of, equal to any one of, or between any two of 10, 20, 30, 40, 50, 60, 70, 80, 90, and 100 μm.

The homogeneous feed mixture can have a compositional make-up that is substantially homogeneous, and a compositional make-up for a 0.5 mm × 0.5 mm × 0.5 mm cube at any position of the mixture can be similar (e.g. within ± 10 %, or ± 5 %, or ± 3 %, ± 2 %, or ± 1 %, or ± 0.5 %) to that of a 0.5 mm × 0.5 mm × 0.5 mm cube at any other position of the mixture.

In some aspects, the granulator 302 can be a drum granulator, pugmill, or a pan granulator. In some particular aspects, the granulator 302 can be a rotatory drum granulator. In the granulator 302, the homogeneous feed mixture can be granulated at a temperature of 70 to 100 °C, such as 80 to 85 °C and/or pressure of 0.75 to 1.15 x the atmospheric pressure, such as at atmospheric pressure. In some aspects, the homogeneous feed mixture can be granulated by an agglomeration process. The low pressure steam 310 can have a temperature of 150 °C to 200 °C, or at least any one of, equal to any one of, or between any two of 150, 160, 170, 180, 190, and 200 °C and/or a pressure of 3.5 bar to 4.5 bar or at least any one of, equal to any one of, or between any two of 3.5, 3.7, 3.9, 4, 4.1, 4.3 and 4.5 bar. In some aspects, during drying of the wet granulated mixture, the hot air stream and the wet granulated mixture can have a co-current flow. A co-current hot air flow in the dryer can take out moisture along with dry granules in same direction, and may decrease moisture concentration inside the dryer.

In some aspects, the dryer 304 can be a rotary dryer. The hot air stream 314 can have a temperature of 120 °C to 130 °C, or at least any one of, equal to any one of, or between any two of 120, 121, 122, 123, 124, 125, 126, 127, 128, 129, and 130 °C

In some aspects, the cooler 306 can be a rotary cooler. The air stream 318 can be an ambient temperature (e.g. 15 °C to 40 °C, or 20 °C to 30 °C) air stream. In some aspects, during cooling of the heated granulated mixture, the air stream and the heated granulated mixture can have a counter-current flow.

Conventionally, dusts generated during fertilizer granulation is removed by using acidified water. After dust removal the acidified water contains plant nutrients. To recover valuable nutrients, the acidified is recycled and added to the granulation step. However, only a portion of the used acidified water can be recycled, and a major portion of the water goes to waste or sold as a reduced value product. Use of the cyclone separators and/or bag filters, e.g., the first dry separator and/or the second dry separator, allows the methods of the present invention to optionally eliminate or reduce use of acid water to remove dusts.

## C. Methods of Using Fertilizer Granules

The fertilizer granule(s), fertilizer composition(s) containing the fertilizer granule(s), and/or fertilizer blends(s) containing the fertilizer granule(s) described herein can be used in methods of increasing the amount of nitrogen, sulfur, Mg, K, and optionally Ca in soil and of enhancing plant growth. Such methods can include applying to the soil an effective amount of a composition comprising the fertilizer granule(s) described herein. The method may include increasing the growth and yield of crops, trees, ornamentals, etc., such as, for example, palm, coconut, rice, wheat, corn, barley, oats, and soybeans. The method can include applying the fertilizer blend of the present invention to at least one of a soil, an organism, a liquid carrier, a liquid solvent, etc. The composition(s) and/or fertilizer blends(s) containing the fertilizer granule(s) can be applied as a top dressing fertilizer.

Non-limiting examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes. The Gymnosperms may include plants from the Araucariaceae, Cupressaceae, Pinaceae, Podocarpaceae, Sciadopitaceae, Taxaceae, Cycadaceae, and Ginkgoaceae families. The Angiosperms may include plants from the Aceraceae, Agavaceae, Anacardiaceae, Annonaceae, Apocynaceae, Aquifoliaceae, Araliaceae, Arecaceae, Asphodelaceae, Asteraceae, Berberidaceae, Betulaceae, Bignoniaceae, Bombacaceae, Boraginaceae, Burseraceae, Buxaceae, Canellaceae, Cannabaceae, Capparidaceae, Caprifoliaceae, Caricaceae, Casuarinaceae, Celastraceae, Cercidiphyllaceae, Chrysobalanaceae, Clusiaceae, Combretaceae, Cornaceae, Cyrillaceae, Davidsoniaceae, Ebenaceae, Elaeagnaceae, Ericaceae, Euphorbiaceae, Fabaceae, Fagaceae, Grossulariaceae, Hamamelidaceae, Hippocastanaceae, Illiciaceae, Juglandaceae, Lauraceae, Lecythidaceae, Lythraceae, Magnoliaceae, Malpighiaceae, Malvaceae, Melastomataceae, Meliaceae, Moraceae, Moringaceae, Muntingiaceae, Myoporaceae, Myricaceae, Myrsinaceae, Myrtaceae, Nothofagaceae, Nyctaginaceae, Nyssaceae, Olacaceae, Oleaceae, Oxalidaceae, Pandanaceae, Papaveraceae, Phyllanthaceae, Pittosporaceae, Platanaceae, Poaceae, Polygonaceae, Proteaceae, Punicaceae, Rhamnaceae, Rhizophoraceae, Rosaceae, Rubiaceae, Rutaceae, Salicaceae, Sapindaceae, Sapotaceae, Simaroubaceae, Solanaceae, Staphyleaceae, Sterculiaceae, Strelitziaceae, Styracaceae, Surianaceae, Symplocaceae, Tamaricaceae, Theaceae, Theophrastaceae, Thymelaeaceae, Tiliaceae, Ulmaceae, Verbenaceae, and/or Vitaceae family.

The effectiveness of compositions comprising the fertilizer granule(s) of the present invention can be ascertained by measuring the amount of nitrogen in the soil at various times after applying the fertilizer composition to the soil. It is understood that different soils have different characteristics, which can affect the stability of the nitrogen in the soil. The effectiveness of a fertilizer composition can also be directly compared to other fertilizer compositions by doing a side-by-side comparison in the same soil under the same conditions.

**EXAMPLES**

The present invention will be described in greater detail by way of specific examples.

**Example 1 (Reference example)**

**Fertilizer granules containing Urea and Polyhalite**

**Methods:** Urea and polyhalite from individual hoppers were batched according to weight ratios provided in Table 1, to form feed mixtures. Ten sets, 1-10, of feed mixtures were formed. For each set, the N, S, Mg, K, and Ca wt. % in the feed mixtures and in the granulated fertilizer compositions (e.g. containing fertilizer granules) produced, is provided in Table 1. For each set, the feed mixture was crushed by a crusher and passed through screens to obtain a feed mixture of uniform size. The feed mixture was mixed thoroughly to form a homogeneous feed mixture and was then fed to a rotary drum steam granulator. In the rotary drum steam granulator granules were formed by an agglomeration process. Low pressure steam was fed to the granulator, and was contacted with the mixture being granulated. From the granulator the material was fed to a rotary dryer. A co-current hot air flow was used for drying in the dryer. The hot air for drying was produced in a hot air generator. From the dryer the material was fed to a vibrating feeder to separate lumps, and then the material was fed to a first screen. Air from the dryer was passed through cyclone separators and bag filters to remove dust materials. Desired product material from the first screen was fed to a rotary cooler. Material in the rotary cooler was cooled with ambient air having an counter-current flow. Air from the cooler was passed through cyclone separators and bag filters to remove dust materials. After the cooler, the material was then fed to a series of screens where the fines were separated from the product mixture, and the separated fines were recycled back to the granulator. The average recycling rate was about 50%.

The average crushing strength of the fertilizer granules for each of the sets, 1-10, was greater than 2.5 kg/granule, with an average of 2.8 kg/granule. The crushing strength of a reference granule containing urea without a metal sulfate, produced using similar method steps as above, e.g. for sets 1-10, was around 2 kg/granule. The granules were spherical shaped with an average product size of >4 mm for 5% of the granules produced, 1-4 mm for 94.3% of the granules produced, and <1 mm for 0.7% of the granules produced.

**Table 1:** Fertilizers produced from urea and polyhalite.

| Set # | Urea (wt. %) | Polyhalite (wt. %) | N (wt. %) | K$_2$O (wt. %) | S (wt. %) | Mg (wt. %) | Ca (wt. %) |
|-------|--------------|--------------------|-----------|-----------------|-----------|------------|------------|
| 1 | 10 | 90 | 5 | 13 | 17 | 3 | 11 |
| 2 | 20 | 80 | 9 | 11 | 15 | 3 | 10 |
| 3 | 32 | 68 | 15 | 10 | 13 | 2 | 8 |
| 4 | 40 | 60 | 18 | 8 | 11 | 2 | 7 |
| 5 | 50 | 50 | 23 | 7 | 10 | 2 | 6 |
| 6 | 58 | 42 | 27 | 6 | 8 | 1 | 5 |
| 7 | 72 | 28 | 33 | 4 | 5 | 1 | 3 |
| 8 | 80 | 20 | 37 | 3 | 4 | 1 | 2 |
| 9 | 90 | 10 | 41 | 1 | 2 | 0.4 | 1 |
| 10 | 87 | 13 | 40 | 2 | 2 | 0.5 | 2 |

**Example 2**

**Fertilizer granules containing Urea and Langbenite**

**Methods:** Urea and langbeinite from individual hoppers were batched according to weight ratios provided in Table 2 to form feed mixtures. Ten sets, 11-20, of feed mixtures were formed. For each set, the N, S, Mg, and K, wt. % in the feed mixtures and in the granulated fertilizer compositions (e.g. containing fertilizer granules) produced, is provided in Table 2. For each set, granulated fertilizer compositions were produced from the feed mixtures according to methods similar to Example 1. Average crushing strength of the fertilizer granules for each of the sets, 11-20, were greater than 2.5 kg/granule, with an average of 2.8 kg/granule. The crushing strength of a reference granule containing urea without a metal sulfate, produced using similar method steps as above, e.g. for sets 1-10, was around 2 kg/granule. The granules were spherical shaped with an average product size of >4 mm for 5% of the granules produced, 1-4 mm for 94.3% of the granules produced, and <1 mm for 0.7% of the granules produced. Set # 16 to 20 are provided for reference purposes.

Table 2: Fertilizers produced from urea and langbeinite.

| Set # | Urea (wt. %) | Langbeinite (wt. %) | N (wt. %) | K$_2$O (wt. %) | S (wt. %) | Mg (wt. %) |
|---|---|---|---|---|---|---|
| 11 | 10 | 90 | 5 | 20 | 20 | 10 |
| 12 | 20 | 80 | 9 | 18 | 18 | 9 |
| 13 | 32 | 68 | 15 | 15 | 15 | 7 |
| 14 | 40 | 60 | 18 | 13 | 13 | 7 |
| 15 | 48 | 52 | 22 | 11 | 11 | 6 |
| 16 | 58 | 42 | 27 | 9 | 9 | 5 |
| 17 | 72 | 28 | 33 | 6 | 6 | 3 |
| 18 | 80 | 20 | 37 | 4 | 4 | 2 |
| 19 | 90 | 10 | 41 | 2 | 2 | 1 |
| 20 | 87 | 13 | 40 | 3 | 3 | 1 |

## Example 3

### Fertilizer granules containing Urea, Polyhalite, and Langbenite

**Methods:** Urea, polyhalite, and langbeinite from individual hoppers were batched according to weight ratios provided in Table 3 to form feed mixtures. Nine sets, 21-29, of feed mixtures were formed. For each set, the N, S, Mg, K and Ca, wt. % in the feed mixtures and in the granulated fertilizer compositions (e.g. containing fertilizer granules) produced, is provided in Table 3. For each set, granulated fertilizer compositions were produced from the feed mixtures according to methods similar to Example 1. Average crushing strength of the fertilizer granules for each of the sets, 21-29, were greater than 2.5 kg/granule, with an average of 2.8 kg/granule. The crushing strength of a reference granule containing urea without a metal sulfate, produced using similar method steps as above, e.g. for sets 1-10, was around 2 kg/granule. The granules were spherical shaped with an average product size of >4 mm for 5% of the granules produced, 1-4 mm for 94.3% of the granules produced, and <1 mm for 0.7% of the granules produced.

Table 3: Fertilizers produced from urea, polyhalite and langbeinite.

| Set # | Urea (wt. %) | Polyhalite (wt. %) | Langbenite (wt. %) | N (wt. %) | K$_2$O (wt. %) | S (wt. %) | Mg (wt. %) | Ca (wt. %) |
|---|---|---|---|---|---|---|---|---|
| 21 | 10 | 45 | 45 | 5 | 16 | 18 | 7 | 5 |
| 22 | 20 | 40 | 40 | 9 | 14 | 16 | 6 | 5 |
| 23 | 30 | 35 | 35 | 14 | 13 | 14 | 5 | 4 |
| 24 | 40 | 30 | 30 | 18 | 11 | 12 | 4 | 4 |
| 25 | 50 | 25 | 25 | 23 | 9 | 10 | 4 | 3 |
| 26 | 60 | 20 | 20 | 28 | 7 | 8 | 3 | 2 |
| 27 | 70 | 15 | 15 | 32 | 5 | 6 | 2 | 2 |
| 28 | 80 | 10 | 10 | 37 | 4 | 4 | 1 | 1 |
| 29 | 90 | 5 | 5 | 41 | 2 | 2 | 1 | 1 |

## Example 4

### Characterization of the Fertilizer Granules

Chemical analysis for chemical content of the fertilizer granules can be determined by methods known in the art.

As non-limiting examples, nitrogen content can be determined by the Total Nitrogen in Fertilizer by Combustion Technique described in AOAC official Method 993.13.1996 (AOAC International). Calcium content can be determined by the Calcium by Atomic Absorption Spectrometric Method described in ISO 10084, 1992 (International Organization for Standardization). Sulfur content can be determined by the Gravimetric Barium Sulfate Method described in ISO 10084, 1992 (International Organization for Standardization).

The purity of the components can be cross-checked by NMR, HPLC, and LCMS analysis.

Granule size can be determined using standard sieve test methods. The granules are expected to be able to be produced in any size required for fertilizer applications, such as spherical granules having a diameter of between 5 mm and 5 cm.

Crush strength can be determined by a commercial compression tester (Chatillon Compression Tester). Individual granules between 2 to 4 mm in diameter can be placed on a mounted flat (stainless steel) surface and pressure applied by a flat-end rod (stainless steel) attached to the compression tester. A gauge mounted in the compression tester can measure the pressure (in kilograms) required to fracture the granule. At least 25 granules can be tested and the average of these measurements can be taken as the crush strength. (Ref. method # IFDC S-115 Manual for determining physical properties of fertilizer-IFDC 1993). It is expected that the formulation will have an acceptable crush strength (>2 kgf/granule).

The stability in soil and/or water, release rates, nitrogen volatilization, and nitrogen transformation (nitrification) can be measured in different soils and/or water and compared to other fertilizers and to products on the market. A soil that is representative of a broader class of soil types can be used to measure the properties of the fertilizer. Greenville soil and Crowley soil are two such representative soils. Other soils may also be used for the experiments described herein.

Nitrogen volatilization can be determined as the percentage of nitrogen loss via ammonia volatilization as compared to the amount of nitrogen applied or as the absolute mass of nitrogen lost via ammonia volatilization.

Benefits to crops can be determined and compared to other fertilizers and to products on the market. Non-limiting properties of the crop that can be tested include growth rate, root mass, head size, fruit size, grain size and mass, number of plants, number of fruits or grains, date to maturity, drought tolerance, heat and cold tolerance, yield, etc.

Surface and cross-sectional morphology of the fertilizer granule of the present invention can be carried out using a scanning electron microscope (SEM). These morphology studies can be used to determine the properties of a coated or uncoated fertilizer of the present invention.

## Claims

1. A fertilizer granule comprising a homogeneous mixture comprising:

   10 to 48 wt. % urea; and
   52 to 90 wt. % langbeinite,
   the weight percentages based on the total weight of the homogeneous mixture;
   wherein the fertilizer granule comprises less than 0.1 wt.% or no crystalline adduct having the formula of $CaSO_4.4CO(NH_2)_2$.

2. The fertilizer granule of claim 1, wherein the homogeneous mixture comprises 0.1 to 15 wt. % of calcium (Ca).

3. The fertilizer granule of claim 1 or claim 2, wherein the homogeneous mixture comprises 6 to 10 wt. % of Mg, 11 to 20 wt. % of K, 1 to 11 wt. % of Ca, urea in an amount providing 5 to 22 wt. % of N, and sulfate in an amount providing 11 to 20 wt. % of S.

4. The fertilizer granule of any one of claims 1 to 3, wherein the homogeneous mixture comprises a moles of K, b moles of Ca, c moles of Mg, and d moles of S, wherein the moles of K (a), Ca (b), Mg (c), and S (d) satisfy the following formula:

$$d \geq 0.9 \times ((a/2) + b + c),$$

where a, b, c, and d are positive real numbers.

5. The fertilizer granule of any one of claims 1 to 4, wherein the homogeneous mixture further comprises $K_2Ca_2Mg(SO_4)_4$.

6. The fertilizer granule of any one of claims 1 to 5, comprising a coat comprising an urease inhibitor, an nitrification inhibitor, a micronutrient, humic acid, and/or granulation aids.

7. A method for making the fertilizer granule of any one of claims 1 to 6, the method comprising:

contacting a feed mixture, said feed mixture comprising langbeinite, urea and optionally a Ca source, with water and granulating the feed mixture in presence of a low pressure steam to form a wet granulated mixture;
drying the wet granulated mixture to form a heated granulated mixture; and
cooling the heated granulated mixture to form a cooled granulated mixture comprising the fertilizer granule.

8. The method of claim 7, wherein dusts generated during the granulation step and/or drying step is separated from a hot air stream used in the drying, the separating being performed by a first dry separator and/or wherein dusts generated during the cooling step is separated from an air stream used in the cooling, the separating being performed by a second dry separator, optionally wherein the first dry separator is a first cyclone separator and/or the second dry separator is a second cyclone separator.

9. The method of claim 7 or claim 8, wherein the feed mixture is in particulate form, optionally wherein the particulate form has an average particle size of 10 $\mu$m to 100 $\mu$m.

10. The method of any one of claims 7 to 9, wherein:

prior to granulation the feed mixture is ground, passed through one or more size screens, and blended to obtain a homogeneous feed mixture; and
the homogeneous feed mixture is granulated in the granulation step,
optionally wherein the particulate form has an average particle size of 10 $\mu$m to 100 $\mu$m.

11. The method of any one of claims 7 to 10, wherein the feed mixture is contacted with water in form of the low pressure steam having a pressure of 350000 Pa to 450000 Pa and/or a temperature of 150 °C to 200 °C.

12. The method of any one of claims 7 to 11, wherein:

the wet granulated mixture is dried with a hot air stream having a temperature of 120 °C to 130 °C, and/or wherein the heated granulated mixture is cooled with an air stream; and/or
during drying of the wet granulated mixture, a hot air stream used in the drying and the wet granulated mixture have a co-current flow; and/or
during cooling of the heated granulated mixture, a air stream used in the cooling and the heated granulated mixture have a counter-current flow.

13. A method of fertilizing, the method comprising applying a fertilizer granule of any one of claims 1 to 6 to at least a portion of a soil, a crop, or the soil and the crop.

**Patentansprüche**

1. Düngemittelgranulat, bestehend aus einem homogenen Gemisch, das umfasst:

10 bis 48 Gew.-% Harnstoff; und
52 bis 90 Gew.-% Langbeinit,
wobei die Gewichtsprozente auf das Gesamtgewicht des homogenen Gemisches bezogen sind;
wobei das Düngemittelgranulat weniger als 0,1 Gew.-% oder kein kristallines Addukt mit der Formel Ca-SO$_4$.4CO(NH$_2$)$_2$ enthält.

2. Düngemittelgranulat nach Anspruch 1, wobei das homogene Gemisch 0,1 bis 15 Gew.-% Calcium (Ca) enthält.

3. Düngemittelgranulat nach Anspruch 1 oder Anspruch 2, wobei das homogene Gemisch 6 bis 10 Gew.-% Mg, 11 bis 20 Gew.-% K, 1 bis 11 Gew.-% Ca, Harnstoff in einer Menge, die 5 bis 22 Gew.-% N liefert, und Sulfat in einer Menge, die 11 bis 20 Gew.-% S liefert, enthält.

4. Düngemittelgranulat nach einem der Ansprüche 1 bis 3, wobei das homogene Gemisch a Mol K, b Mol Ca, c Mol Mg und d Mol S enthält, wobei die Mole von K (a), Ca (b), Mg (c) und S (d) die folgende Formel erfüllen:

$$d \geq 0{,}9 \text{ x } ((a / 2) + b + c),$$

wobei a, b, c und d positive reelle Zahlen sind.

5. Düngemittelgranulat nach einem der Ansprüche 1 bis 4, wobei das homogene Gemisch ferner $K_2Ca_2Mg(SO_4)_4$ enthält.

6. Düngemittelgranulat nach einem der Ansprüche 1 bis 5, das eine Beschichtung umfasst, die einen Ureaseinhibitor, einen Nitrifikationsinhibitor, einen Mikronährstoff, Huminsäure und/oder Granulierhilfsmittel umfasst.

7. Verfahren zur Herstellung des Düngemittelgranulats nach einem der Ansprüche 1 bis 6, wobei das Verfahren umfasst:

Inkontaktbringen eines Beschickungsgemischs, wobei das Beschickungsgemisch Langbeinit, Harnstoff und optional eine Ca-Quelle umfasst, mit Wasser und Granulieren des Beschickungsgemischs in Gegenwart von Niederdruckdampf zur Bildung eines nassen granulierten Gemischs;
Trocknen des nassen granulierten Gemischs zur Bildung eines erhitzten granulierten Gemischs; und
Kühlen des erhitzten granulierten Gemischs, um ein gekühltes granuliertes Gemisch zu bilden, das das Düngemittelgranulat enthält.

8. Verfahren nach Anspruch 7, wobei während des Granulierungsschritts und/oder des Trocknungsschritts erzeugte Stäube von einem bei der Trocknung verwendeten Heißluftstrom abgetrennt werden, wobei die Abtrennung durch einen ersten Trockenabscheider durchgeführt wird und/oder wobei während des Kühlschritts erzeugte Stäube von einem bei der Kühlung verwendeten Luftstrom abgetrennt werden, wobei die Abtrennung durch einen zweiten Trockenabscheider durchgeführt wird, optional wobei der erste Trockenabscheider ein erster Zyklonabscheider ist und/oder der zweite Trockenabscheider ein zweiter Zyklonabscheider ist.

9. Verfahren nach Anspruch 7 oder Anspruch 8, wobei das Beschickungsgemisch in partikulärer Form vorliegt, optional wobei die partikuläre Form eine durchschnittliche Partikelgröße von 10 $\mu$m bis 100 $\mu$m aufweist.

10. Verfahren nach einem der Ansprüche 7 bis 9, wobei:

das Beschickungsgemisch vor der Granulierung gemahlen, durch ein oder mehrere Größensiebe geleitet und gemischt wird, um ein homogenes Beschickungsgemisch zu erhalten; und
das homogene Beschickungsgemisch in der Granulierungsstufe granuliert wird,
wobei optional die partikuläre Form eine durchschnittliche Partikelgröße von 10 $\mu$m bis 100 $\mu$m aufweist.

11. Verfahren nach einem der Ansprüche 7 bis 10, wobei das Beschickungsgemisch mit Wasser in Form von Niederdruckdampf mit einem Druck von 350000 Pa bis 450000 Pa und/oder einer Temperatur von 150 °C bis 200 °C in Kontakt gebracht wird.

12. Verfahren nach einem der Ansprüche 7 bis 11, wobei:

das nasse Granulatgemisch mit einem Heißluftstrom mit einer Temperatur von 120 °C bis 130 °C getrocknet wird, und/oder wobei das erwärmte Granulatgemisch mit einem Luftstrom abgekühlt wird; und/oder
während der Trocknung des feuchten Granulatgemisches ein zur Trocknung verwendeter Heißluftstrom und das feuchte Granulatgemisch im Gleichstrom strömen; und/oder
während der Kühlung des erwärmten Granulatgemisches ein zur Kühlung verwendeter Luftstrom und das erwärmte Granulatgemisch im Gegenstrom strömen.

13. Verfahren zum Düngen, wobei das Verfahren das Ausbringen eines Düngemittelgranulats nach einem der Ansprüche 1 bis 6 auf mindestens einen Teil eines Bodens, einer Kultur oder des Bodens und der Kultur umfasst.

## Revendications

1. Granulé d'engrais comprenant un mélange homogène comprenant :

   10 à 48 % en poids d'urée ; et
   52 à 90 % en poids de langbéinite,
   les pourcentages en poids étant basés sur le poids total du mélange homogène ;
   dans lequel le granulé d'engrais comprend moins de 0,1 % en poids ou une quantité nulle d'un adduit cristallin de formule $CaSO_4.4CO(NH_2)_2$.

2. Granulé d'engrais selon la revendication 1, dans lequel le mélange homogène comprend 0,1 à 15 % en poids de calcium (Ca).

3. Granulé d'engrais selon la revendication 1 ou la revendication 2, dans lequel le mélange homogène comprend 6 à 10 % en poids de Mg, 11 à 20 % en poids de K, 1 à 11 % en poids de Ca, de l'urée en une quantité fournissant 5 à 22 % en poids de N, et du sulfate en une quantité fournissant 11 à 20 % en poids de S.

4. Granulé d'engrais selon l'une quelconque des revendications 1 à 3, dans lequel le mélange homogène comprend a moles de K, b moles de Ca, c moles de Mg, et d moles de S, dans lequel les moles de K (a), de Ca (b), de Mg (c), et de S (d) satisfont la formule suivante :

$$d \geq 0{,}9 \text{ x } ((a/2) + b + c),$$

   où a, b, c, et d sont des nombres réels positifs.

5. Granulé d'engrais selon l'une quelconque des revendications 1 à 4, dans lequel le mélange homogène comprend en outre $K_2Ca_2Mg(SO_4)_4$.

6. Granulé d'engrais selon l'une quelconque des revendications 1 à 5, comprenant un enrobage comprenant un inhibiteur d'uréase, un inhibiteur de nitrification, un micronutriment, de l'acide humique, et/ou des aides à la granulation.

7. Procédé de fabrication du granulé d'engrais de l'une quelconque des revendications 1 à 6, le procédé comprenant :

   la mise en contact d'un mélange d'apport, ledit mélange d'apport comprenant de la langbéinite, de l'urée et éventuellement une source de Ca, avec de l'eau et la granulation du mélange d'apport en présence de vapeur à basse pression pour former un mélange granulé humide ;
   le séchage du mélange granulé humide pour former un mélange granulé chauffé ; et
   le refroidissement du mélange granulé chauffé pour former un mélange granulé refroidi comprenant le granulé d'engrais.

8. Procédé selon la revendication 7, dans lequel des poussières générées pendant l'étape de granulation et/ou l'étape de séchage sont séparées d'un flux d'air chaud utilisé dans le séchage, la séparation étant réalisée par un premier séparateur à sec et/ou dans lequel des poussières générées pendant l'étape de refroidissement sont séparées d'un flux d'air utilisé dans le refroidissement, la séparation étant réalisée par un deuxième séparateur à sec, éventuellement dans lequel le premier séparateur à sec est un premier séparateur cyclonique et/ou le deuxième séparateur à sec est un deuxième séparateur cyclonique.

9. Procédé selon la revendication 7 ou la revendication 8, dans lequel le mélange d'apport est sous forme particulaire, éventuellement dans lequel la forme particulaire a une taille moyenne de particule de 10 μm à 100 μm.

10. Procédé selon l'une quelconque des revendications 7 à 9, dans lequel :

    avant la granulation le mélange d'apport est broyé, amené à passer à travers un ou plusieurs tamis, et malaxé pour obtenir un mélange d'apport homogène ; et
    le mélange d'apport homogène est granulé à l'étape de granulation,
    éventuellement dans lequel la forme particulaire a une taille moyenne de particule de 10 μm à 100 μm.

**11.** Procédé selon l'une quelconque des revendications 7 à 10, dans lequel le mélange d'apport est mis en contact avec de l'eau sous la forme de la vapeur à basse pression ayant une pression de 350 000 Pa à 450 000 Pa et/ou une température de 150 °C à 200 °C.

**12.** Procédé selon l'une quelconque des revendications 7 à 11, dans lequel :

le mélange granulé humide est séché avec un flux d'air chaud ayant une température de 120 °C à 130 °C, et/ou dans lequel le mélange granulé chauffé est refroidi avec un flux d'air ; et/ou
pendant le séchage du mélange granulé humide, un flux d'air chaud utilisé dans le séchage et le mélange granulé humide ont un écoulement concourant ; et/ou
pendant le refroidissement du mélange granulé chauffé, un flux d'air utilisé dans le refroidissement et le mélange granulé chauffé ont un écoulement à contre-courant.

**13.** Procédé de fertilisation, le procédé comprenant l'application d'un granulé d'engrais de l'une quelconque des revendications 1 à 6 sur au moins une portion d'un sol, d'un plant, ou du sol et du plant.

FIG. 1A

FIG. 1B

FIG. 2A

FIG. 2B

**EP 4 267 533 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2774907 A, Biskupski
- US 5409516 A, Achard
- FR 2684372
- WO 2020064036 A1
- GB 1263719 A
- CN 103130580 A